# EUROPÄISCHE PATENTANMELDUNG

(11) **EP 3 028 793 A1**
(43) Veröffentlichungstag der Anmeldung: **08.06.2016**
(21) Anmeldenummer: 14196293.6
(22) Anmeldetag: 04.12.2014
(51) Int. Cl.: B22F 3/105, B22F 5/04, B22F 7/08, B22D 19/02, F01D 5/14

(54) **Verfahren zur Herstellung einer Laufschaufel**

(71) Anmelder: Siemens Aktiengesellschaft, 80333 München (DE)
(72) Erfinder: Barkowski, David, 47058 Duisburg (DE)

(57) **Zusammenfassung**

Ein Verfahren zur Herstellung einer Laufschaufel (120) für eine Gasturbine (100) mit einem Befestigungsbereich (162) und einer Plattform (160), an der ein in einer Schaufelspitze (167) endendes Schaufelblatt (166) angeordnet ist, soll einen besonders hohen Wirkungsgrad der Gasturbine bei besonders ressourcenschonender Herstellung ermöglichen. Dazu umfasst es die Verfahrensschritte:
- Herstellen einer Bewehrung (144),
- Gießen eines ersten Teils der Laufschaufel (120) um zumindest einen Teil der Bewehrung (144), und
- Aufbauen eines zweiten Teils der Laufschaufel (120) mittels eines 3D-Druckverfahrens.

## Beschreibung

Die Erfindung betrifft ein Verfahren zur Herstellung einer Laufschaufel für eine Gasturbine mit einem Befestigungsbereich und einer Plattform, an der ein in einer Schaufelspitze endendes Schaufelblatt angeordnet ist. Sie betrifft weiter eine derartige Laufschaufel.

Laufschaufeln der oben genannten Art dienen in Gasturbinen zur Umwandlung der Energie eines heißen Gasstroms in rotatorische Energie. Sie weisen typischerweise ein von Hohlräumen zur Führung von Kühlluft durchzogenes Schaufelblatt auf, das an einer so genannten Plattform befestigt ist. An die Plattform schließt sich ein Befestigungsbereich zur Befestigung der Turbinenschaufel an Rotor oder Stator der Gasturbine an.

Laufschaufeln für Gasturbinen werden derzeit gusstechnisch aus einem Stück und einem Werkstoff hergestellt. Dies erfolgt in der Regel im Vakuumfeingussverfahren. Im Zuge der weiteren Wirkungsgradverbesserung aktueller Gasturbinen insbesondere durch die Erhöhung des Massenstroms hat sich jedoch herausgestellt, dass bei in diesem Verfahren hergestellten Turbinenschaufeln Stabilitätsprobleme auftreten können. Zudem ist die für die Herstellung der Kühlkanäle verwendete Form in der Regel nicht wiederverwendbar.

Es ist daher Aufgabe der Erfindung, ein Verfahren und eine Laufschaufel der eingangs genannten Art anzugeben, die einen besonders hohen Wirkungsgrad der Gasturbine bei besonders ressourcenschonender Herstellung ermöglichen.

Diese Aufgabe wird bezüglich des Verfahrens erfindungsgemäß gelöst, indem das Verfahren die Verfahrensschritte umfasst:
- Herstellen einer Bewehrung,
- Gießen eines ersten Teils der Laufschaufel um zumindest einen Teil der Bewehrung, und
- Aufbauen eines zweiten Teils der Laufschaufel mittels eines 3D-Druckverfahrens.

Bezüglich der Laufschaufel wird die Aufgabe gelöst, indem die Laufschaufel eine im Inneren angeordnete Bewehrung umfasst.

Die Erfindung geht dabei von der Überlegung aus, dass bezüglich der Erhöhung des Massenstromes durch die Gasturbine die Auslegung insbesondere der vierten Turbinenlaufschaufelstufe an fertigungstechnische Grenzen stößt: Die Laufschaufel soll eine eingangs beschriebene Innenstruktur besitzen und aktiv gekühlt werden. Die Ermittlung und Auswertung kritischer Parameter und Kennzahlen aus Strömungsfläche und Drehzahl hat dabei insbesondere bei der vierten Turbinenlaufschaufelstufe gezeigt, dass es erforderlich wäre, die Bauteilwandstärke im oberen Bereich des Schaufelblattes auf etwa 1 mm in sehr engen Grenzen auszuführen. Eine Wandstärke von 1 mm ist bei einem derart großen Bauteil generell schwer umsetzbar. Dieses Problem kann gelöst werden, indem die Laufschaufel nicht komplett mitgegossen wird, sondern mittels eines 3D-Druckverfahrens hergestellt wird. Hierbei können sehr komplexe Geometrien im Innern der Schaufel hergestellt werden. Das Problem ist, dass mit den bekannten 3D-Druckverfahren eine geringere Bauteilfestigkeit erreicht wird. Um die Festigkeit der durch 3D-Druck hergestellten Laufschaufeln zu erhöhen, wird daher vorgeschlagen, einen Verbundwerkstoff zu nutzen. Ähnlich wie beim Stahlbeton sollten Streben eines festeren Materials in das Grundmaterial eingelassen werden. Diese Bewehrung mit den genannten Streben wird zunächst hergestellt, danach Teile der Laufschaufel um die Bewehrung herum gegossen und schließlich insbesondere die filigranen Teile der Laufschaufel wie z. B. die Kühlluftkanäle mittels 3D-Druck aufgebaut.

Die Streben sollten sich dabei - ebenso wie beim Stahlbeton - in Richtung der Hauptbelastung richten. Dies betrifft insbesondere die Belastung durch die Fliehkraft im Betrieb der Gasturbine, die radial nach außen, d. h. in Richtung der Schaufelspitze wirkt und zur Schaufelspitze hin immer größer wird. Die Bewehrung sollte daher vorteilhafterweise mindestens eine Strebe umfassen, die sich von einem Bereich der Laufschaufelspitze bis zu der Plattform erstreckt, mithin also durch das gesamte Schaufelblatt hindurch in Richtung der Belastung. Hierdurch wird eine Stabilisierung des Schaufelblatts gegen die auftretende Fliehkraft erreicht.

Noch weiter verbessert wird die Stabilität, indem die Bewehrung vorteilhafterweise eine Strebe umfasst, die sich von dem Bereich der Laufschaufelspitze bis zu dem Befestigungsbereich erstreckt. Damit wird die gesamte Laufschaufelstruktur vom Befestigungsbereich am Laufschaufelfuß bis zur Spitze des Schaufelblatts durch eine durchgehende Strebe stabilisiert.

In weiterer vorteilhafter Ausgestaltung des Verfahrens umfasst der oben beschriebene erste Teil, der um die Bewehrung gegossen wird, den Befestigungsbereich. Der Befestigungsbereich, der in der Regel eine tannenbaumartige Nut-Feder-Struktur aufweist, umfasst in der Regel keine oder nur wenige Kühlkanäle und damit eine weniger komplizierte Geometrie. Er kann daher insbesondere auch mit einer wiederverwendbaren Form hergestellt werden. Durch das Gießen des Befestigungsbereiches hat dieser zudem die erforderliche Festigkeit und es wird ein guter Verbund zur Bewehrung hergestellt.

Gleiches gilt für die Plattform, die den Befestigungsbereich gegen das Heißgas im Turbinenkanal abdichtet. Auch diese kann mit einer wiederverwendbaren Form gegossen werden und erhält hierdurch eine besonders hohe Festigkeit. Der gegossene erste Teil umfasst daher vorteilhafterweise die Plattform.

In weiterer vorteilhafter Ausgestaltung des Verfahrens umfasst der gegossene erste Teil der Laufschaufel eine Umhüllung zumindest eines Teils der Streben der Bewehrung in einem Bereich des Schaufelblatts. Mit anderen Worten: Um die Bewehrung im Bereich des Schaufelblatts wird eine Umhüllung aus Vollmaterial gegossen. Diese kann beispielsweise mit einer vorgegebenen Dicke um die jeweilige Strebe gegossen werden. Hierdurch wird ein Verbund zur Bewehrung hergestellt, der als Substrat für den 3D-Druck zu dienen.

Vorteilhafterweise ist die Bewehrung aus Stahl gefertigt. Hierbei kommen insbesondere aktuell verwendete Schaufelwerkstoffe in Frage, so z. B. hochfeste Stähle oder Legierungen mit entsprechend hoher Zugfestigkeit und im Vergleich zum umliegenden Werkstoff hohem Elastizitätsmodul. Derartige Materialien eignen sich durch ihre hohe Festigkeit besonders dafür, die im Betrieb auftretenden Fliehkräfte aufzunehmen und die Laufschaufel zu stabilisieren. Weiterhin weisen sie einen hohen Schmelzpunkt auf, so dass sie während des Gießprozesses des Schaufelfußes oder der Umhüllung stabil bleiben.

Der zweite, mittels des 3D-Druckverfahrens aufgebaute Teil der Laufschaufel umfasst vorteilhafterweise einen Bereich des Schaufelblatts. Gerade hier sind komplexe Strukturen wie z. B. Kühlkanäle herzustellen, die mittels des 3D-Drucks besonders einfach und flexibel geformt werden können.

Diese Kühlkanäle werden vorteilhafterweise bei Aufbauen des zweiten Teils in den Bereich des Schaufelblatts angeordnet.

In vorteilhafter Ausgestaltung des Verfahrens wird selektives Laserschmelzen als 3D-Druckverfahren verwendet. Beim selektiven Laserschmelzen wird der zu verarbeitende Werkstoff in Pulverform in einer dünnen Schicht auf dem bereits gegossenen Teil der Laufschaufel aufgebracht. Der pulverförmige Werkstoff wird mittels Laserstrahlung lokal vollständig umgeschmolzen und bildet nach der Erstarrung eine feste Materialschicht. Anschließend wird die Laufschaufel um den Betrag einer Schichtdicke abgesenkt und erneut Pulver aufgetragen. Dieser Zyklus wird solange wiederholt, bis alle Schichten umgeschmolzen sind.

Eine Laufschaufel für eine Gasturbine ist vorteilhafterweise mit einem der bis hier beschriebenen Verfahren hergestellt.

Eine Gasturbine umfasst vorteilhafterweise eine derartige Laufschaufel.

Die mit der Erfindung erzielten Vorteile bestehen insbesondere darin, dass durch die Nutzung eines Verbundwerkstoffes die Schwäche von 3D-Druck-Werkstoffen kompensiert wird und ein solches Verfahren für die Herstellung von Turbinenschaufeln anwendbar wird. Mit dem Verfahren kann die Wandstärke des Schaufelblatts geringer sein und es können auch längere Laufschaufeln hergestellt werden, so dass sich Wirkungsgrad und Leistung der Gasturbine verbessern.

Ausführungsbeispiele der Erfindung werden anhand einer Zeichnung näher erläutert. Darin zeigen:
- FIG 1: einen teilweisen Längsschnitt durch eine Gasturbine,
- FIG 2: eine Bewehrung für eine Laufschaufel,
- FIG 3: die Bewehrung mit gegossenem Schaufelfuß im Schnitt,
- FIG 4: die Bewehrung mit gegossenem Schaufelfuß und teilweiser Umhüllung der Bewehrung, und
- FIG 5: einen Schnitt durch die Laufschaufel.
Gleiche Teile sind in allen Figuren mit denselben Bezugszeichen versehen.

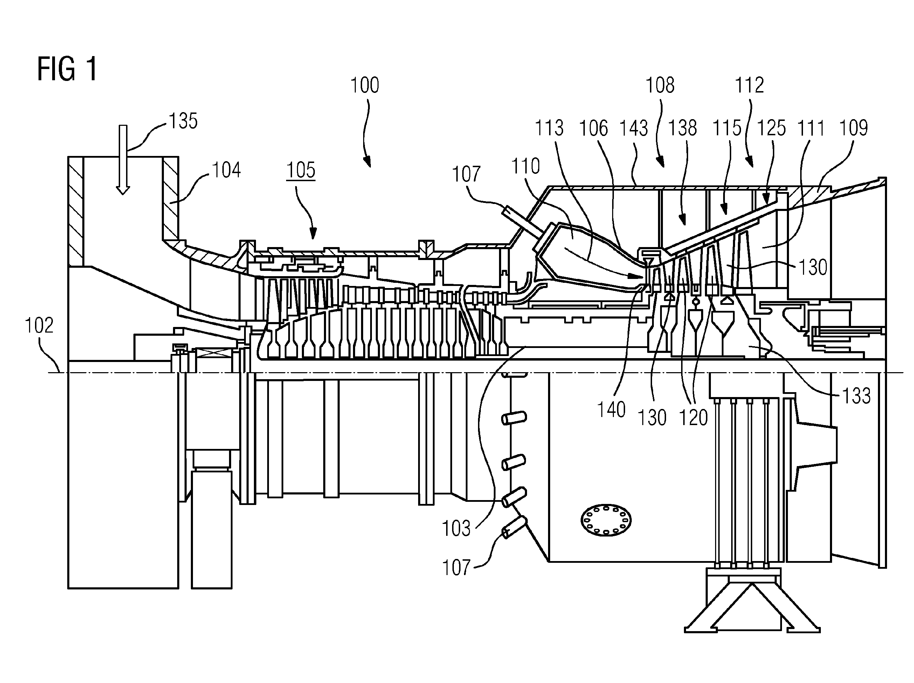

Die FIG 1 zeigt eine Gasturbine 100 in einem Längsteilschnitt. Eine Turbine ist eine Strömungsmaschine, welche die innere Energie (Enthalpie) eines strömenden Fluids (Flüssigkeit oder Gas) in Rotationsenergie und letztlich in mechanische Antriebsenergie umwandelt.

Die Gasturbine 100 weist im Inneren einen um eine Rotationsachse 102 (Axialrichtung) drehgelagerten Rotor 103 auf, der auch als Turbinenläufer bezeichnet wird. Entlang des Rotors 103 folgen aufeinander ein Ansauggehäuse 104, ein Verdichter 105, eine torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem ringförmigen Heißgaskanal 111. Dort bilden beispielsweise vier hintereinander geschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125. Die Schaufeln 120, 130 sind leicht gekrümmt profiliert, ähnlich einer Flugzeugtragfläche.

Die Leitschaufeln 130 sind dabei am Stator 143 befestigt, wohingegen die Laufschaufeln 120 einer Reihe 125 mittels einer Turbinenscheibe 133 am Rotor 103 angebracht sind. Die Laufschaufeln 120 bilden somit Bestandteile des Rotors oder Läufers 103. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120.

Dem Fluidstrom wird durch die möglichst wirbelfreie laminare Umströmung der Turbinenschaufeln 120, 130 ein Teil seiner inneren Energie entzogen, der auf die Laufschaufeln 120 der Turbine 108 übergeht. Über diese wird dann der Rotor 103 in Drehung versetzt, wodurch zunächst der Verdichter 105 angetrieben wird. Die nutzbare Leistung wird an die nicht dargestellte Arbeitsmaschine abgegeben.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet. Die hohen Belastungen machen höchstbelastbare Werkstoffe erforderlich. Die Turbinenschaufeln 120, 130 werden daher aus Titan-Legierungen, Nickel-Superlegierung oder Wolfram-Molybdän-Legierungen gefertigt. Die Schaufeln werden für höhere Resistenz gegen Temperaturen so wie Erosion wie zum Beispiel Lochfraß, auch bekannt unter "pitting corrosion", durch Beschichtungen gegen Korrosion (MCrAlX; M = Fe, Co, Ni, Seltene Erden) und Wärme (Wärmedämmschicht, beispielsweise ZrO2, Y2O4-ZrO2) geschützt. Die Beschichtung zur Hitzeabschirmung wird Thermal Barrier Coating bzw. kurz TBC genannt. Weitere Maßnahmen, um die Schaufeln hitzeresistenter zu machen, bestehen in ausgeklügelten Kühlkanalsystemen. Diese Technik wird sowohl in den Leit- als auch in den Laufschaufeln 120, 130 angewendet.

Jede Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Dichtring 140 des Stators 143 festgelegt. Jeder Dichtring 140 umschließt dabei die Welle des Rotors 103. Ebenso weist jede Laufschaufel 120 einen derartigen Laufschaufelfuß auf, wie in den folgenden Figuren noch dargestellt wird, endet jedoch in einer Laufschaufelspitze.

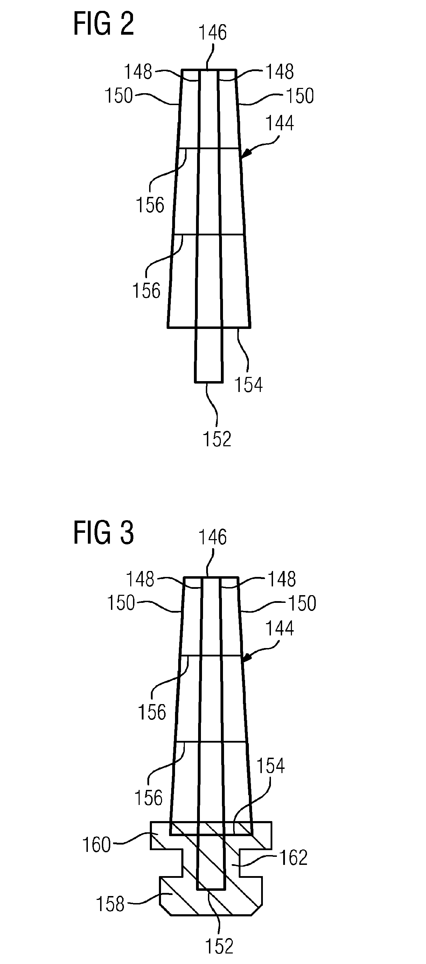

FIG 2 zeigt eine Bewehrung 144 für eine derartige Laufschaufel 120. Die Bewehrung 144 weist eine obere Querstrebe 146 auf. Von der oberen Querstrebe 146 weisen in gleichem Abstand zueinander insgesamt vier Längsstreben 148, 150 leicht strahlenförmig voneinander weg strebend nach unten. Die beiden mittleren Längsstreben 148 sind etwas länger als die äußeren Längsstreben 150. Sie sind gleich lang und an ihrem Ende über eine untere Querstrebe 152 verbunden. Am Ende der ebenfalls gleich langen äußeren Längsstreben 150 sind diese miteinander und mit den mittleren Längsstreben 150 über eine weitere Querstrebe 154 verbunden. Zwischen der weiteren Querstrebe 154 und der oberen Querstrebe 146 sind alle Längsstreben 148, 150 durch in regelmäßigem Abstand angeordnete mittlere Querstreben 156 miteinander verbunden.

Die in FIG 2 dargestellte Anordnung der Längs- und Querstreben 146, 148, 150, 152, 154, 156 ist nur beispielhaft. In weiteren alternativen Ausführungsformen können natürlich Anzahl, Orientierung und Verteilung der Streben entsprechend der auftretenden Kräfte gewählt werden.

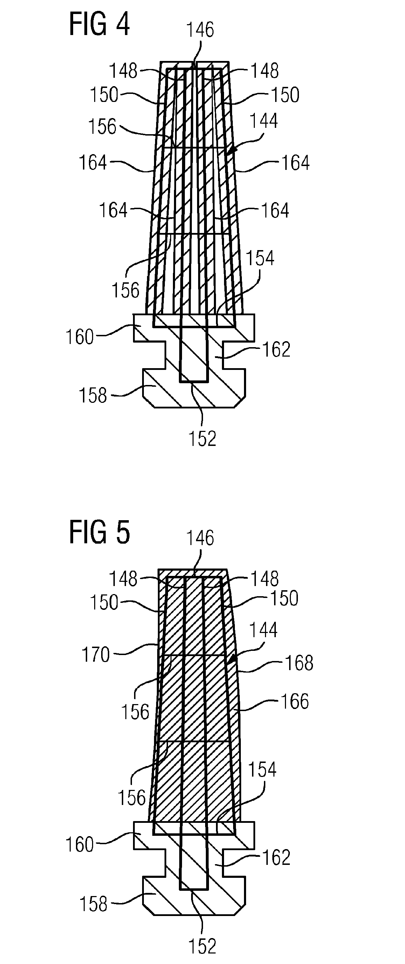

Die Längs- und Querstreben 146, 148, 150, 152, 154, 156 bilden so eine stabile Bewehrung 144, die im Inneren einer Laufschaufel 120 angeordnet sein kann. Der Prozess der Herstellung der Laufschaufel 120 wird anhand der folgenden Figuren erläutert. Zunächst wird die Bewehrung 144 wie beschrieben hergestellt. Sie besteht aus einer hochfesten Stahllegierung und bleibt im in FIG 3 und 4 gezeigten Gießprozess stabil.

In einem ersten Ausführungsbeispiel des Verfahrens wird wie in FIG 3 gezeigt nur der Laufschaufelfuß 158 gegossen. Dieser umfasst eine Plattform 160 zur Abdichtung der Innenbereiche des Rotors 103 gegen das Heißgas im Heißgaskanal 111 sowie einen Befestigungsbereich 162, der eine für eine Nut-Feder-Verbindung am Rotor ausgestaltete beidseitige Feder aufweist. Erkennbar liegt hierbei die Querstrebe 154 in der Plattform 160. Die über die Querstrebe 154 nach unten erstreckten Bereiche der mittleren Längsstreben 148 und die untere Querstrebe 152 liegen im Befestigungsbereich 162.

In einem zweiten Ausführungsbeispiel des Verfahrens werden wie in FIG 4 gezeigt zusätzlich zum Laufschaufelfuß 158 Umhüllungen 164 jeder Längsstrebe 150, 152 gegossen. Diese können beispielsweise zylindrisch mit der Längsstrebe 150, 152 als Achse ausgebildet sein. In beiden Ausführungsbeispielen kann beim Guss eine vergleichsweise einfache, wieder verwendbare Form benutzt werden.

FIG 5 zeigt schließlich die fertige Laufschaufel 120. Die übrigen Teile des Körpers der Laufschaufel 120 wurden ausgehend von dem in FIG 3 bzw. 4 gezeigten Bauteil mittels selektivem Laserschmelzen hergestellt. Der so hergestellte Teil umfasst insbesondere das Schaufelblatt 166, wobei im Bereich der Laufschaufelspitze 167 die obere Querstrebe 146 der Bewehrung 144 angeordnet ist.

Das Schaufelblatt 166 weist eine relativ komplexe Geometrie auf: Sein Profil ähnelt dem einer Flugzeugtragfläche. Es weist eine abgerundete Profilnase 168 und eine Profilhinterkante 170 auf. Zwischen Profilnase 168 und Profilhinterkante 170 erstrecken sich eine konkave Druckseitenwand und eine konvexe Saugseitenwand der Laufschaufel 120. Zwischen Druckseitenwand und Saugseitenwand sind im Inneren mehrere nicht näher dargestellte Kühlluftkanäle eingebracht.

Die beschriebene komplexe Geometrie kann mittels des 3D-Drucks ausgehend von der teilgegossenen Laufschaufel 120 besonders einfach aufgebaut werden. Durch die Bewehrung 144 werden die strukturellen Schwächen des im 3D-Druck hergestellten Materials kompensiert.

## Patentansprüche

1. Verfahren zur Herstellung einer Laufschaufel (120) für eine Gasturbine (100) mit einem Befestigungsbereich (162) und einer Plattform (160), an der ein in einer Schaufelspitze (167) endendes Schaufelblatt (166) angeordnet ist, umfassend die Verfahrensschritte:
- Herstellen einer Bewehrung (144),
- Gießen eines ersten Teils der Laufschaufel (120) um zumindest einen Teil der Bewehrung (144), und
- Aufbauen eines zweiten Teils der Laufschaufel (120) mittels eines 3D-Druckverfahrens.

2. Verfahren nach Anspruch 1,
bei dem die Bewehrung (144) eine Strebe (148, 150) umfasst, die sich von einem Bereich der Laufschaufelspitze (167) bis zu der Plattform (160) erstreckt.

3. Verfahren nach Anspruch 2,
bei dem die Bewehrung eine Strebe (148) umfasst, die sich von dem Bereich der Laufschaufelspitze (167) bis zu dem Befestigungsbereich (162) erstreckt.

4. Verfahren nach einem der vorhergehenden Ansprüche,
bei dem der erste Teil den Befestigungsbereich (162) umfasst.

5. Verfahren nach Anspruch 4,
bei dem der erste Teil die Plattform (160) umfasst.

6. Verfahren nach Anspruch 4 oder 5,
bei dem der erste Teil eine Umhüllung (164) zumindest eines Teils der Streben (148, 150) der Bewehrung (144) in einem Bereich des Schaufelblatts (166) umfasst.

7. Verfahren nach einem der vorhergehenden Ansprüche,
bei dem die Bewehrung (144) aus Stahl gefertigt ist.

8. Verfahren nach einem der vorhergehenden Ansprüche,
bei dem der zweite Teil einen Bereich des Schaufelblatts (166) umfasst.

9. Verfahren nach Anspruch 8,
bei dem bei Aufbauen des zweiten Teils Kühlkanäle in den Bereich des Schaufelblatts (166) angeordnet werden.

10. Verfahren nach einem der vorhergehenden Ansprüche,
bei dem selektives Laserschmelzen als 3D-Druckverfahren verwendet wird.

11. Laufschaufel (120) für eine Gasturbine (100),
hergestellt mit dem Verfahren nach einem der vorhergehenden Ansprüche.

12. Laufschaufel (120) für eine Gasturbine (100),
umfassend eine im Inneren angeordnete Bewehrung (144).

13. Gasturbine (100) mit einer Laufschaufel (120) nach Anspruch 11 oder 12.
